# EUROPEAN PATENT APPLICATION

(11) **EP 2 327 678 A1**
(43) Date of publication of application: **01.06.2011**
(21) Application number: 09177071.9
(22) Date of filing: 25.11.2009
(51) Int. Cl.: C07B 59/00

(54) **Manufacture and usage of (gamma18o3)atp or [gamma18o3]gtp**

(71) Applicant: Deutsches Krebsforschungszentrum, 69120 Heidelberg (DE)
(72) Inventor: Kübler, Dieter, 69259 Wilhelmsfeld (DE); Schäfer, Markus, 69117 Heidelberg (DE); Lehmann, Wolf-Dieter, 69120 Heidelberg (DE); Seidler, Jörg, 69121 Heidelberg (DE)
(74) Representative: Herzog, Martin

(57) **Abstract**

The present invention relates to the field of mass modified isotopic labels. Specifically, it relates to a method for the manufacture of [γ¹⁸O₃]ATP or [γ¹⁸O₃]GTP comprising the steps of contacting succinyl CoA synthetase with ADP or GDP and a [P¹⁸O₄]³⁻ containing salt under conditions which allow for conversion of ADP into [γ¹⁸O₃]ATP or GDP into [γ¹⁸O₃]GTP and obtaining such [γ¹⁸O₃]ATP or [γ¹⁸O₃]GTP Moreover, the invention encompasses the use of [γ¹⁸O₃]ATP or [γ¹⁸O₃]GTP for labeling polypeptides and polynucleotides.

## Description

The present invention relates to the field of mass modified isotopic labels. Specifically, it relates to a method for the manufacture of [γ¹⁸O₃]ATP or [γ¹⁸O₃]GTP comprising the steps of contacting succinyl CoA synthetase with ADP or GDP and a [p¹⁸O₄]³⁻ containing salt under conditions which allow for conversion of ADP into [γ¹⁸O₃]ATP or GDP into [γ¹⁸O₃]GTP and obtaining such [γ¹⁸O₃]ATP or [γ¹⁸O₃]GTP. Moreover, the invention encompasses the use of [γ¹⁸O₃]ATP or [γ¹⁸O₃]GTP for labeling polypeptides and polynucleotides.

In the last decades much detailed knowledge has accrued in understanding biological mechanisms of biological reactions. Many of these reactions involve the participation of nucleoside 5'triphosphates either as direct substrates or as precursors of phosphorylated intermediates or cofactors. The role of nucleoside 5'triphosphates has been elucidated by using theses compounds traditionally labeled by ³²P in one or more of their phosphorus atoms. The requirement for such labeled compounds has led to the development of a variety of enzymatic methods for their synthesis. In particular, the preparation of compounds having the γ-position of the nucleoside 5'triphosphates labeled has been accomplished. These methods involve the phosphorylation of a nucleoside 5'triphosphate by an appropriate ³²P-labeled phosphate donor such as acetyl phosphate (Kornberg, et al 1956, Metaphosphate synthesis by an enzyme from Escherichia coli. Biochim Biophys Acta. 1956, 20(1):215-27), carbamyl phosphate (Mokrasch et al., 1960, A highly active carbamate kinase and its application to the regeneration and preparation of [32P] adenine nucleotides. Biochim Biophys Acta. 1960, 37:442-7), diphosphoglyceric acid (Glynn and Chapell, 1964, A simple method for the preparation of 32-P-labelled adenosine triphosphate of high specific activity. Biochem J. 1964, 90(1):147-9) or polyphosphoric acid (Kornberg 1957, Adenosine triphosphate synthesis from polyphosphate by an enzyme from Escherichia coli. Biochim Biophys Acta. 1957, 26(2):294-300) in the presence of an appropriate kinase. Due to the specificities of used enzymes the methods have been then primarily restricted to the synthesis of γ-labeled adenosine 5'triphosphates, [γ-³²P]ATP. In 1979 Walseth and Johnson (The enzymatic preparation of [alpha-(32)P]nucleoside triphosphates, cyclic [32P] AMP, and cyclic [32P] GMP. Biochim Biophys Acta. 1979; 28;562(1):l1-31) described an enzymatic preparation of [γ-³²P]ATP using ADP phosphoglycerate kinase.

Recently, a non radioactive mass modified isotopic label has been used (Zhou, Meng, Jobson, Pommier, Veenstra. Detection of in vitro kinase generated protein phosphorylation sites using gamma[1804]-ATP and mass spectrometry. Anal Chem. 2007; 15;79(20):7603-10), in which four oxygen-16 atoms of the terminal phosphate group are substituted with oxygen-18 resulting in [γ¹⁸O₄]ATP. Using such mass modified isotopic labels two advantages arise, one not being time limited in analysis because of the missing radioactive decay, second not being restricted in working at laboratories where working with radioactivity is permitted. The mass isotopic label was chemically synthesized.

However, so far no method for producing of mass modified isotopic labels at high purity in large scale and at low cost has been developed. Furthermore, using ADP phosphoglycerate kinase for enzymatic synthesis of a mass modified isotopic label only low yield was obtained.

Thus, there is a need for means and methods which allow the efficient production of such mass modified isotopic labels.

Therefore, the present invention relates to a method for the manufacture of [γ¹⁸O₃]ATP or [γ¹⁸O₃]GTP comprising the steps of
a) contacting succinyl CoA synthetase with ADP or GDP and a [P¹⁸O_{4]}³⁻ containing salt under conditions which allow for conversion of ADP into [γ¹⁸O₃]ATP or GDP into [γ¹⁸O₃]GTP; and
b) obtaining said [γ¹⁸O₃]ATP or [γ¹⁸O₃]GTP.

The term "manufacture" as used herein encompasses the generation of [γ¹⁸O₃]ATP or [γ¹⁸O₃]GTP, and, preferably, includes its purification.

The term "contacting" refers to bringing said [P¹⁸O₄]³⁻ containing salt in physical proximity with succinyl CoA synthetase to allow physical and/or chemical interactions between said [P¹⁸O₄]³⁻ containing salt and succinyl CoA synthetase, preferably between bonds of said [P¹⁸O₄]³⁻ containing salt and the succinyl CoA synthetase. As a result of said physical or chemical interactions the transfer of the phosphate group of the [P¹⁸O₄]³⁻ containing salt to ADP or GDP is accomplished leading to the production of [γ¹⁸O₃]ATP or [γ¹⁸O₃]GTP, respectively. It is to be understood that contacting as used herein can be achieved in an *in vitro* system using suitable conditions which allow for said specific interaction, for example using any aqueous solution, such as distilled water, physiological saline, Ringer's solutions, dextrose solution, and Hank's solution. Preferably a buffer containing optimal salt and pH conditions is known to the person skilled in the art. Moreover, a time being sufficient to allow interaction can also be determined by the skilled worker without further ado. In accordance with the present invention, contacting as used herein can also be achieved *in vivo* in the cytosol of a microorganism. As referred elsewhere in the specification, the succinyl CoA synthetase can be expressed either endogenously or exogenously in such specified microorganisms. Moreover, contacting can also be achieved in the cell media when using transgenic microorganisms expressing succinyl CoA synthetase that is coupled to an export sequence. As a consequence, succinyl CoA synthetase is transported out of the microorganism into the cell media where contacting of the succinyl CoA synthetase with supplied said [P¹⁸O₄]³⁻ containing salt occurs.

The term "succinyl CoA synthetase" encompasses the enzymatic transfer of Pᵢ to ADP or GDP, to generate [γ¹⁸O₃]ATP or [γ¹⁸O₃]GTP or variants, respectively.

The polynucleotide sequence encoding succinyl CoA synthetase (EC 6.2.1.5 and EC 6.2.1.4) is defined in SEQ ID NO 1 and 2 (β-subunit and α-subunit specific for ADP) or SEQ ID NO 1 and 3 (β-subunit and α-subunit specific for GDP), respectively. Moreover, the above defined polynucleotide sequences encoding succinyl CoA synthetase also encompass variants of the ADP or GDP specific succinyl CoA synthetase. Said variants may represent orthologs, paralogs or other homologs of the above defined polynucleotide.

The polynucleotide variants, preferably, also comprise a nucleic acid sequence characterized in that the sequence can be derived from the aforementioned specific nucleic acid sequence by at least one nucleotide substitution, addition and/or deletion whereby the variant nucleic acid sequence shall still encode a polypeptide having a biological activity as specified above. Variants also encompass polynucleotides comprising a nucleic acid sequence which is capable of hybridizing to the aforementioned specific nucleic acid sequences, preferably, under stringent hybridization conditions. These stringent conditions are known to the skilled worker and can be found in Current Protocols in Molecular Biology, John Wiley & Sons, N. Y. (1989), 6.3.1-6.3.6. A preferred example for stringent hybridization conditions are hybridization conditions in 6 x sodium chloride/ sodium citrate (= SSC) at approximately 45°C, followed by one or more wash steps in 0.2 x SSC, 0.1% SDS at 50 to 65°C. The skilled worker knows that these hybridization conditions differ depending on the type of nucleic acid and, for example when organic solvents are present, with regard to the temperature and concentration of the buffer. For example, under "standard hybridization conditions" the temperature differs depending on the type of nucleic acid between 42°C and 58°C in aqueous buffer with a concentration of 0.1 to 5 x SSC (pH 7.2). If organic solvent is present in the abovementioned buffer, for example 50% formamide, the temperature under standard conditions is approximately 42°C. The hybridization conditions for DNA: DNA hybrids are, preferably, 0.1 x SSC and 20°C to 45°C, preferably between 30°C and 45°C. The hybridization conditions for DNA:RNA hybrids are, preferably, 0.1 x SSC and 30°C to 55°C, preferably between 45°C and 55°C. The abovementioned hybridization temperatures are determined for example for a nucleic acid with approximately 100 bp (= base pairs) in length and a G + C content of 50% in the absence of formamide. The skilled worker knows how to determine the hybridization conditions required by referring to textbooks such as the textbook mentioned above, or the following textbooks: Sambrook et al., "Molecular Cloning", Cold Spring Harbor Laboratory, 1989; Hames and Higgins (Ed.) 1985, "Nucleic Acids Hybridization: A Practical Approach", IRL Press at Oxford University Press, Oxford; Brown (Ed.) 1991, "Essential Molecular Biology: A Practical Approach", IRL Press at Oxford University Press, Oxford. Alternatively, polynucleotide variants are obtainable by PCR-based techniques such as mixed oligonucleotide primer- based amplification of DNA, i.e. using degenerated primers against conserved domains of the polypeptides of the present invention. Conserved domains of the polypeptide of the present invention may be identified by a sequence comparison of the nucleic acid sequences of the polynucleotides or the amino acid sequences of the polypeptides of the present invention. Oligonucleotides suitable as PCR primers as well as suitable PCR conditions are described in the accompanying Examples. As a template, DNA or cDNA from bacteria, fungi, plants or animals may be used. Further, variants include polynucleotides comprising nucleic acid sequences which are at least 70%, at least 75%, at least 80%, at least 85%, at least 90%, at least 95%, at least 98% or at least 99% identical to the aforementioned nucleic acid encoding polypeptides retaining a biological activity as specified above.

Moreover, also encompassed are polynucleotides which comprise nucleic acid sequences encoding amino acid sequences which are at least 70%, at least 75%, at least 80%, at least 85%, at least 90%, at least 95%, at least 98% or at least 99% identical to the aforementioned amino acid sequence, wherein the polypeptide comprising the amino acid sequence retains a biological activity as specified above. The percent identity values are, preferably, calculated over the entire amino acid or nucleic acid sequence region. A series of programs based on a variety of algorithms is available to the skilled worker for comparing different sequences. In this context, the algorithms of Needleman and Wunsch or Smith and Waterman give particularly reliable results. To carry out the sequence alignments, the program PileUp (J. Mol. Evolution., 25, 351-360, 1987, Higgins et al., CABIOS, 5 1989: 151-153) or the programs Gap and BestFit (Needleman and Wunsch (J. Mol. Biol. 48; 443-453 (1970)) and Smith and Waterman (Adv. Appl. Math. 2; 482-489 (1981))), which are part of the GCG software packet [Genetics Computer Group, 575 Science Drive, Madison, Wisconsin, USA 53711 (1991)], are to be used. The sequence identity values recited above in percent (%) are to be determined, preferably, using the program GAP over the entire sequence region with the following settings: Gap Weight: 50, Length Weight: 3, Average Match: 10.000 and Average Mismatch: 0.000, which, unless otherwise specified, shall always be used as standard settings for sequence alignments. For the purposes of the invention, the percent sequence identity between two nucleic acid or polypeptide sequences can be also determined using the Vector NTI 7.0 (PC) software package (InforMax, 7600 Wisconsin Ave., Bethesda, MD 20814). A gap-opening penalty of 15 and a gap extension penalty of 6.66 are used for determining the percent identity of two nucleic acids. A gap-opening penalty of 10 and a gap extension penalty of 0.1 are used for determining the percent identity of two polypeptides. All other parameters are set at the default settings. For purposes of a multiple alignment (Clustal W algorithm), the gap-opening penalty is 10, and the gap extension penalty is 0.05 with blosum62 matrix. It is to be understood that for the purposes of determining sequence identity when comparing a DNA sequence to an RNA sequence, a thymidine nucleotide sequence is equivalent to an uracil nucleotide.

A polynucleotide comprising a fragment of the aforementioned nucleic acid sequences is also encompassed as a polynucleotide of the succinyl CoA synthetase. The fragment shall encode a polypeptide which still has a biological activity as specified above. Accordingly, the polypeptide may comprise or consist of the domains of the polypeptide of the succinyl CoA synthetase conferring the said biological activity. A fragment as meant herein, preferably, comprises at least 20, at least 50, at least 100, at least 250 or at least 500 consecutive nucleotides of any one of the aforementioned nucleic acid sequences or encodes an amino acid sequence comprising at least 20, at least 30, at least 50, at least 80, at least 100 or at least 150 consecutive amino acids of any one of the aforementioned amino acid sequences.

The aforementioned polynucleotides either essentially consist of the aforementioned nucleic acid sequences or comprise the aforementioned nucleic acid sequences. Thus, they may contain further nucleic acid sequences as well. Preferably, the polynucleotide may comprise in addition to an open reading frame further untranslated sequence at the 3' and at the 5' terminus of the coding gene region: at least 500, preferably 200, more preferably 100 nucleotides of the sequence upstream of the 5' terminus of the coding region and at least 100, preferably 50, more preferably 20 nucleotides of the sequence downstream of the 3' terminus of the coding gene region. Furthermore, the polynucleotides of the present invention may encode fusion proteins wherein one partner of the fusion protein is a polypeptide being encoded by a nucleic acid sequence recited above. Such fusion proteins may comprise as additional part targeting sequences to target the succinyl CoA synthetase to different sites in-between the microorganism, but preferably the target sequence is an export sequence that allows the transport of the succinyl CoA synthetase outside the microorganism into the cell medium.

Variant polynucleotides as referred to in accordance with the present invention may be obtained by various natural as well as artificial sources. For example, polynucleotides may be obtained by in vitro and in vivo mutagenesis approaches using the above mentioned specific polynucleotides as a basis. Moreover, polynucleotids being homologs or orthologs may be obtained from various animal, plant, bacteria or fungus species. Paralogs may be identified from E. coli.

The term "obtaining" refers to an isolation and/or purification step known to the person skilled in the art, preferably using precipitation, columns and products of the kit that is part of the present invention, more preferably the [γ¹⁸O₃]ATP or [γ¹⁸O₃]GTP is obtained by purification using HPLC, to preferably obtain [γ¹⁸O₃]ATP or [γ¹⁸O₃]GTP in a purified pure form, or free or substantially free of other cellular materials or culture medium when produced by recombinant techniques, or substantially free of chemical precursors when chemically manufactured in vitro. Preferably, after said isolation and/or purification [γ¹⁸O₃]ATP or [γ¹⁸O₃]GTP exhibits a purity of at least 80%, preferably 80%-90%, more preferably 90%-97%, most preferred more than 97% up to an absolute pure form without any contamination. The term "purification" encompasses means and methods such as chromatographic devices. Preferred means for purification to be used in the system of the present invention include chromatographic devices, more preferably devices for liquid chromatography, HPLC and/or gas chromatography. Preferably, before purification by HPLC and/or gas chromatography a separation by reversed phase liquid chromatography is performed. These techniques are well known in the art and can be applied by the person skilled in the art without further ado. Further, "obtaining" as used herein may also include steps which are required to stop the enzymatic reaction prior to further isolation and/or purification steps.

In a preferred embodiment of the present invention, a [P¹⁸O₄]³⁻ containing salt is synthesized comprising the steps of:
i) Hydrolysing PC1₅ in presence of H₂¹⁸O at 20°C-90°C; and
ii) Converting H₃P¹⁸O₄ to a [P¹⁸O₄]³⁻ containing salt.

Preferably, the hydrolysis of PC1₅ in presence of H₂¹⁸O is performed at 20°C-90°C, more preferably at 60°C-80°C, most preferably at 70°C. Preferably, the hydrolysis also includes a purification step wherein the H₃P¹⁸O₄ is separated from the other components of the hydrolysation reaction. In a preferred embodiment of the invention the purification step includes evaporation under reduced pressure and rotation, and treatment in a vacuum exsiccator. The suitable conditions are well known to the person skilled in the art. Moreover, a time being sufficient for hydrolysis and purification can also be determined by the skilled worker.

The term "converting" encompasses a chemical reaction producing a [P¹⁸O₄]³⁻ containing salt. In said chemical reaction an alkali metal hydroxide, preferably NaOH, reacts with H₃P¹⁸O₄, to form a tri-alkaliphosphate, preferably Na₃[P¹⁸O₄].

In a preferred embodiment of the present invention at least the step of contacting succinyl CoA synthetase with ADP or GDP and a [P¹⁸O₄]³⁻ containing salt is carried out by a microorganism.

The term "microorganism" refers to any animal or plant cell. Moreover, it encompasses bacteria, yeast, algae and fungi. More preferably, the term refers to E.coli.

Preferably, in the present invention the microorganism expresses succinyl CoA synthetase.

The term "expresses" refers to an either endogenous or exogenous expression in such microorganisms. Endogenous expression refers to a microorganism encoding the succinyl CoA synthetase in its wildtype genome. Exogenous expression occurs in a microorganism containing a transgene, or in a microorganism whose genome has been modified by the introduction of a transgene. Transgenic microorganisms may be produced by several methods including the introduction of a transgene comprising polynucleotide (usually DNA) into a target cell or integration of the transgene into a chromosome of a target cell by methods well known to the person skilled in the art. Theses methods include preferably transformation or transfection of the microorganism by suitable vectors.

A vector encompasses phage, plasmid, viral or retroviral vectors as well artificial chromosomes, such as bacterial or yeast artificial chromosomes. Moreover, the term also relates to targeting constructs which allow for random or site- directed integration of the targeting construct into genomic DNA. Such target constructs, preferably, comprise DNA of sufficient length for either homologous or heterologous recombination. The vector encompassing the polynucleotides of the present invention, preferably, further comprises selectable markers for propagation and/or selection in a host. The vector may be incorporated into a host cell by various techniques well known in the art. For example, a plasmid vector can be introduced in a precipitate such as a calcium phosphate precipitate or rubidium chloride precipitate, or in a complex with a charged lipid or in carbon-based clusters, such as fullerens. Alternatively, a plasmid vector may be introduced by heat shock or electroporation techniques.

More preferably, the polynucleotide is operatively linked to expression control sequences allowing expression in prokaryotic or eukaryotic cells or isolated fractions thereof. Expression of said polynucleotide comprises transcription of the polynucleotide, preferably into a translatable mRNA. Regulatory elements ensuring expression in eukaryotic cells, preferably mammalian cells, are well known in the art. They, preferably, comprise regulatory sequences ensuring initiation of transcription and, optionally, poly-A signals ensuring termination of transcription and stabilization of the transcript. Additional regulatory elements may include transcriptional as well as translational enhancers. Possible regulatory elements permitting expression in prokaryotic host cells comprise, e.g., the *lac, trp* or *tac* promoter in *E*. *coli,* and examples for regulatory elements permitting expression in eukaryotic host cells are the *AOX1* or *GAL1* promoter in yeast or the CMV-, SV40-, RSV-promoter (Rous sarcoma virus), CMV-enhancer, SV40-enhancer or a globin intron in mammalian and other animal cells. Moreover, inducible expression control sequences may be used in an expression vector encompassed by the present invention. Such inducible vectors may comprise *tet* or *lac* operator sequences or sequences inducible by heat shock or other environmental factors. Suitable expression control sequences are well known in the art. For example, the techniques are described in Sambrook, Molecular Cloning A Laboratory Manual, Cold Spring Harbor Laboratory (1989) N.Y. and Ausubel, Current Protocols in Molecular Biology, Green Publishing Associates and Wiley Interscience, N.Y. (1994).

The present invention in principle, encompasses the use of succinyl CoA synthetase for the manufacture of [γ¹⁸O₃]ATP or [γ¹⁸O₃]GTP. Preferably, said succinyl CoA synthetase is expressed to this end by a microorganism.

The present invention also relates to a method for labelling a polynucleotide or a polypeptide comprising:
a) providing [γ¹⁸O₃]ATP or [γ¹⁸O₃]GTP for labelling using the steps of the above method of the invention; and
b) providing a sample for labelling comprising a polynucleotide or a polypeptide and one or more mass-modified isotopic labels, one mass-modified isotopic label being [γ¹⁸O₃]ATP or [γ¹⁸O₃]GTP and
c) determining the presence of [γ¹⁸O₃]ATP or [γ¹⁸O₃]GTP labels on a polynucleotide or a polypeptide.

The term "polynucleotide" in accordance with the present invention includes DNA molecules, RNA molecules or derivatives thereof. Preferably, DNA molecules may be oligonucleotides or polynucleotides such as cDNA or genomic DNA. RNA molecules, preferably, include microRNA, siRNA, mRNA, tRNA or ribozymes. Moreover, it includes chemically modified polynucleotids, such as methylated and phosphorylated polynucleotides.

The term "polypeptide" as used herein encompasses essentially purified polypeptides or polypeptide preparations comprising other polypeptides in addition. Further, the term also relates to fusion proteins or polypeptide fragments. Moreover, it includes chemically modified polypeptides. Such modifications may be artificial modifications or naturally occurring modifications such as phosphorylation, glycosylation, myristylation and the like. The terms "polypeptide", "peptide" or "protein" are used interchangeable throughout this specification.

According to the present invention a sample contains (a) polynucleotide(s) and/or polypeptide(s) for phosphorylation by the method of the present invention. The term "sample" refers to a sample of a plant, to a sample of a microorganism or to a sample of an animal, preferably a mammal, more preferred a human. Therefore the term "sample" also refers to a sample of a body fluid, to a sample of separated cells or to a sample from a tissue or an organ. Samples of body fluids can be obtained by well known techniques and include, preferably, samples of blood, plasma, serum, or urine, more preferably, samples of blood, plasma or serum. Tissue or organ samples may be obtained from any tissue or organ by, e.g., biopsy. Separated cells may be obtained from the body fluids or the tissues or organs by separating techniques such as centrifugation or cell sorting. The samples may also be derived from normal and diseased cells or animals, preferably mammals, more preferred humans. The samples may also be purified by methods specified in this specification. Moreover, a sample may contain not only one polynucleotide and/or polypeptide species, but a mixture of different polynucleotide or polypeptide species.

The term "mass modified isotopic label" refers to a molecule/ label in which one or more atoms are substituted with its isotope(s). Therefore, the resulting mass of the molecule/ label is different from the naturally occurring molecule/ label containing none isotope(s). Preferably, a mixture of different mass modified isotopic labels is used for labeling resulting in heavy and light isotopically labeled phosphopolynucleotides or phosphopolypeptides that are substantially chemically identical, but isotopically distinguishable. Consequently, when determining the samples phosphorylated polynucleotides or polypeptides could be recognized as doublets, triplets etc.

The term "determining" as used herein encompasses the detection of the presence and localization of phosphorylated sites in polynucleotides and/or polypeptides in a quantitative and qualitative manner. "Determining", preferably, comprises mass spectrometry. Preferred devices for compound determination, thus, comprise mass spectrometry devices, more preferably, gas chromatography mass spectrometry (GC-MS), liquid chromatography mass spectrometry (LC-MS), direct infusion mass spectrometry, Fourier transform ion-cyclotron-resonance mass spectrometry (FT-ICR-MS), capillary electrophoresis mass spectrometry (CE-MS), high-performance liquid chromatography mass spectrometry (HPLC-MS), quadrupole mass spectrometry, tandem mass spectrometry (including MS-MS or MS-MS-MS), inductively coupled plasma mass spectrometry (ICP-MS), pyrolysis mass spectrometry (Py-MS) or time-of-flight mass spectrometry (TOF). The separation and determination means are, preferably, coupled to each other. Most preferably, LC-MS and/or GC-MS is used in the system of the present invention.

As an alternative or in addition to mass spectrometry techniques, the following techniques may be used for compound determination: nuclear magnetic resonance (NMR), magnetic resonance imaging (MRI), Fourier transform infrared analysis (FT-IR), ultraviolet (UV) spectrometry, refraction index (RI), fluorescent detection, radiochemical detection, electrochemical detection, light scattering (LS), dispersive Raman spectrometry or flame ionisation detection (FID). These techniques are well known to the person skilled in the art and can be applied without further ado. The method of the present invention shall be, preferably, assisted by automation. For example, sample processing or pre-treatment can be automated by robotics. Data processing and comparison is, preferably, assisted by suitable computer programs and databases. Automation as described herein before allows using the method of the present invention in high-throughput approaches.

Determining as used herein also encompass the purification of polynucleotides or polypeptides by means and methods such as chromatographic devices and means for determination, such as mass spectrometry devices. Preferred means for purification to be used in the system of the present invention include chromatographic devices, more preferably devices for liquid chromatography, HPLC, and/or gas chromatography. These techniques are well known in the art and can be applied by the person skilled in the art without further ado.

In a preferred embodiment of the method of the present invention an unmodified non-isotopic label is used in addition. The unmodified non-isotopic label includes [γ¹⁸O₃]ATP or [γ¹⁶O₃]GTP

In another preferred embodiment of the present invention the polynucleotide or polypeptide is further cleaved into smaller fragments before, after or during the providing of the sample.

A polynucleotide or polypeptide can be cleaved by either chemical or enzymatic processes known in the art.

Preferably, the amide backbone of the polypeptides is cleaved through enzymatic digestion. In a preferred embodiment an enzyme is selected from the group of: trypsin, chymotrypsin, endoproteinase Glu-C (V8-protease), endoproteinase Lys-C, endoproteinase Arg-C, endoproteinase Asp-N, thrombin, papain, pepsin, plasmin or a combination thereof. This digestion step may not be necessary, if the proteins are relatively small.

The enzymatic fragmentation of polynucleotides or polypeptides is well known to the person skilled in the art. Moreover, a time being sufficient to allow fragmentation can also be determined by the skilled worker without further ado.

Yet another embodiment of the present invention further comprising identifying the polynucleotide or polypeptide based on its determined molecular weight by comparison with molecular weight databases comprising molecular weights of known polynucleotides or polypeptides.

The term "comparison" as used herein encompasses comparing the molecular weight of the (phosphorylated) polynucleotide or polypeptide comprised by the sample to be analyzed with a molecular weight of a (phosphorylated) polynucleotide or polypeptide of a database specified below in this description. It is to be understood that comparing as used herein refers to a comparison of corresponding parameters or values, e.g., an absolute molecular weight is compared to an absolute reference molecular weight. The comparison referred to may be carried out manually or computer assisted. For a computer assisted comparison, the value of the determined molecular weight of the (phosphorylated) polynucleotide or polypeptide may be compared to values corresponding to suitable references which are stored in a database by a computer program. The computer program may further evaluate the result of the comparison, i.e. automatically provide the desired assessment in a suitable output format.

The aforementioned method can be carried out on a sample containing only one polynucleotide and/or polypeptide species or on a sample containing different polynucleotides and/or polypeptide species. Such data can be used to generate databases for identification of the phosphorylation status of a polynucleotide and/or polypeptide or to generate databases for identification of nonphosphorylated polynucleotides and/or polypeptides.

Moreover, determining a variety of said samples having different origin the phosphorylation status of a polynucleotide and/or polypeptide can be compared in dependence of its origin, e.g. healthy versus diseased cells or differentiated versus undifferentiated cells.

Phosphorylation of proteins e.g. receptors is essential for transmitting signals from the outside of the cell to the inside of the cell. In addition, by phosphorylation of proteins e.g. transcription factors, these factors can be activated, inactivated or translocated to different sites in-between the cell resulting in a modified cellular expression pattern of certain genes. Thereby, a variety of cellular processes are regulated, such as proliferation, differentiation, growth, division and metabolism. One field of profound importance of said cellular processes is the cancer research. By comparing samples of, e.g., healthy versus diseased cells or subjects certain diseases can be diagnosed and targets can be identified. Thereby a target can be understood as either a phosphorylated protein such as a receptor and a transcription factor or the gene whose expression is regulated by said transcription factor.

In another embodiment of the present invention the method according to the invention is used for identification of a treatment which modulates the phosphorylation status of a polynucleotide and/or polypeptide.

In a screening approach a variety of drugs can be used in a cell based screening assay, wherein the cell lysates or cell media can be determined by the above specified MS methods. By identification of a modified phosphorylation pattern a drug can be identified. Thereby, the importance of such identification of a drug is underscored by the fact that 30% of all drug discovery efforts target protein kinases responsible for the phosphorylation.

In a more preferred embodiment of the present invention the sample is compared to a reference. Preferably, the reference includes a sample generated by a diseased and a sample generated by a healthy subject for diagnosing a disease.

In a certain embodiment of the present invention the aforementioned method is used for analyzing a phosphoproteome. Analyzing a phosphoproteome is an approach to identify, catalog and characterize all proteins containing a phosphate group as a post-translational modification in a sample. Thereby, phosphorylation is a key reversible modification that regulates protein function, protein expression, subcellular localization, complex formation, degradation of proteins and therefore cell signalling networks.

The invention also refers to a kit for the manufacture of [γ¹⁸O₃]ATP or [γ¹⁸O₃]GTP. The kit refers to a collection of the aforementioned compounds, means or reagents of the present invention which may or may not be packaged together. The components of the kit may be comprised by separate vials (i.e. as a kit of separate parts) or provided in a single vial. Moreover, it is to be understood that the kit of the present invention is to be used for practising the methods referred to herein above. It is, preferably, envisaged that all components are provided in a ready-to-use manner for practising the methods referred to above. Further, the kit preferably contains instructions for carrying out the said methods. The instructions can be provided by a users manual in paper- or electronic form. For example, the manual may comprise instructions for interpreting the results obtained when carrying out the aforementioned methods using the kit of the present invention.

Description of the figures:

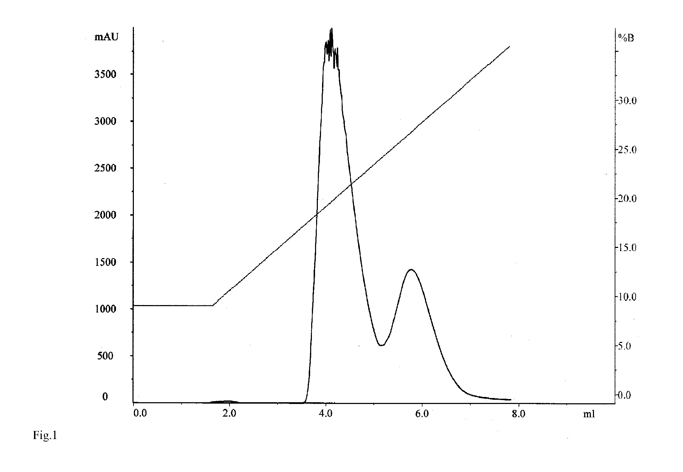

Figure 1: HPLC-elution profile of [γ¹⁸O₃]ATP using a volatile buffer system. The ATP synthesis reaction and HPLC-run was carried out as described in the text. At 9% buffer B the elution gradient was started. Monitoring of effluent fractions was by adsorption at wavelength 258 nm. Assignment of the ATP peak and its quantification was by reference profiles obtained by identical runs with known concentrations of ATP/ADP standards.

The following examples are only intended to illustrate the present invention. They shall not limit the scope of the claims in any way.

### Example 1: Synthesis of [γ¹⁸O₃]ATP

Bacterial succinyl-CoA synthetase (an ammonium sulphate suspension) was diluted in 100 mM glycylglycine buffer, pH 8.1 containing 10 mM MgC1₂. Based on leading experiments for the synthesis of (γ³²P)ATP the reaction with Na₃P¹⁸O₄ was carried out with 1 or 2 enzyme Units per 50 µl total volume of the reaction solution which includes (final concentrations of) 100 mM glycylglycine buffer (pH 8.1), 10 mM MgCl₂, 2.5 mM ADP, 100 µM succinyl-CoA. The reaction was started by the addition of 50 nmol Na₃P¹⁸O₄ and left at RT for 3 min. Reaction stop was by addition of 10 µl I N HC1 and samples were stored at 4°C until purification by HPLC.

The samples were purified by HPLC-system using a C2/C18-column (µRPC) preequilibrated with Triethylamine/acetic acid buffer (pH 7.0) (buffer A) containing 4 mM Triethylamine, 10 mM acetic acid, 0.25% methanol. The column effluent was monitored by spectrophotometrically due to the adsorption maxima of ATP and ADP purine rings at at 258 nm wavelength. Na₃P¹⁸O₄-samples diluted with bidest. water up to 2 ml were injected through a sample loop and the column continuously washed with buffer A until stable baseline was reached. Subsequently, elution of ATP and thereby separation from ADP in the sample was achieved by Triethylamine/acetic acid buffer (pH 5.5) (buffer B) containing 24 mM Triethylamine, 100 mM acetic acid, 30% methanol. A typical elution profile for the ATP separation is given in the Figure below. It shows start of the elution at 9% buffer B and upon application of the buffer gradient ATP gets eluted at 19% buffer B (6 ml elution volume). For determining crop of such [γ¹⁸O₃]ATP purification, parallel runs under identical conditions were performed with ¹⁶O-ATP/ADP standards. Upon 20 repeats of the HPLC-purification runs yields of 100-125 nmol [γ¹⁸O₃]ATP were obtained, respectively.

The [γ¹⁸O₃]ATP fraction being in 80 mM Triethylamine-acetate buffer was further treated to remove the volatile buffer by vacuum centrifugation (Speedvac) until dryness. Then the sample was dissolved in 300µl bidest. water, deep frozen and finally lyophilized under high vacuum. The [γ¹⁸O₃]ATP preparations were kept at -80°C until use, e.g. as the cosubstrate for protein phosphorylation.

### Example 2: Synthesis of Na₃P¹⁸O₄.

Production of ¹⁸O-phosphate was achieved with PC1₅ via a known procedure (Risley, J.M. and Van Etten, R.L. (1979) An oxygen-18 isotope shift upon carbon-13 NMR spectra and its application to the study of oxygen exchange kinetics. J.Am.Chem.Soc. 101, 252-253). Typically 1 mmol PC1₅ was hydrolyzed in presence of 1 ml H₂¹⁸O at 70°C for 2 hrs in a 1.5 ml plastic reaction tube. To obtain a uniform dissipation of temperature during hydrolysis the tube was kept in a PCR apparatus. The product, a mixture of phosphoric acid and hydrochloric acid, was concentrated through a rotary evaporator whereby HC1 was virtually removed due to its lower boiling point. Remaining quantity of HC1 was neutralized by KOH over night (or NaOH with identical outcome) in a vacuum exicator. Eventually the ¹⁸O-phosphoric acid in solution was converted to its salt form Na₃ PO₄ by using 8 N NaOH. Based on the initial amount of PC1₅ the yield of Na₃P¹⁸O₄ was calculated to be at 0.1 mmol under the conditions employed.

## Claims

1. A method for the manufacture of [γ¹⁸O₃]ATP or [γ¹⁸O₃]GTP comprising the steps of:
a) contacting succinyl CoA synthetase with ADP or GDP and a [P¹⁸O₄]³⁻ containing salt under conditions which allow for conversion of ADP into [γ¹⁸O₃]ATP or GDP into [γ¹⁸O₃]GTP; and
b) obtaining said [γ¹⁸O₃]ATP or [γ¹⁸O₃]ATP

2. The method of claim 1, wherein a [P¹⁸O₄]³⁻ containing salt is synthesized comprising the steps of:
i) Hydrolysing PC1₅ in presence of H₂¹⁸O at 20°C-90°C; and
ii) Converting H₃P¹⁸O₄ to a [P¹⁸O₄]³⁻ containing salt.

3. The method of claim 1 or 2, where at least step a) is carried out by a microorganism.

4. The method of claim 3, wherein said microorganism expresses succinyl CoA synthetase.

5. The method of any one of claims 1 to 4, wherein [γ¹⁸O₃]ATP or [γ¹⁸O₃]ATP is obtained by purification using HPLC.

6. Use of succinyl CoA synthetase for the manufacture of [γ¹⁸O₃]ATP or [γ¹⁸O₃]GTP.

7. The use of claim 6, wherein said succinyl CoA synthetase is expressed by a microorganism.

8. A method for labelling a polynucleotide or a polypeptide comprising:
a) providing [γ¹⁸O₃]ATP or [γ¹⁸O₃]GTP for labelling using the steps of any one of the methods of claims 1 to 7; and
b) providing a sample for labelling comprising a polynucleotide or a polypeptide and one or more mass-modified isotopic labels, one mass-modified isotopic label being [γ¹⁸O₃]ATP or [γ¹⁸O₃]GTP and
c) determining the presence of [γ¹⁸O₃]ATP or [γ¹⁸O₃]GTP labels on a polynucleotide or a polypeptide.

9. The method of claim 8, wherein an unmodified non-isotopic label is used in addition.

10. The method of claim 8 or 9, wherein the polynucleotide or polypeptide is further cleaved into smaller fragments before, after or during the step b) of claim 8.

11. The method of any one of claims 8 to 10, wherein determining comprises mass spectrometry.

12. The method of claim 11, wherein said mass spectrometry is a tandem or a FT-ICR (Fourier transform ion cyclotron resonance) mass spectrometry technique.

13. The method of any one of claims 8 to 12, further comprising identifying the polynucleotide or polypeptide based on its determined molecular weight by comparison with molecular weight databases comprising molecular weights of known polynucleotides or polypeptides.
